# EUROPÄISCHE PATENTSCHRIFT

(11) **EP 2 428 629 B1**
(45) Veröffentlichungstag und Bekanntmachung des Hinweises auf die Patenterteilung: **28.11.2018**
(21) Anmeldenummer: 11009379.6
(22) Anmeldetag: 05.03.2008
(51) Int. Cl.: E05B 47/00, G06K 7/08, H04B 13/00

(54) **VERWENDUNG EINES ZUGANGSKONTROLLSYSTEMS SOWIE GEBÄUDE MIT EINEM SYSTEM FÜR DIE ZUGANGSKONTROLLE**
USE OF AN ACCESS CONTROL SYSTEM AND BUILDING PROVIDED WITH AN ACCESS CONTROL SYSTEM
UTILISATION D'UN SYSTÈME POUR LE CONTRÔLE D'ACCÈS ET BÂTIMENT POURVUE D'UN SYSTÈME POUR LE CONTRÔLE D'ACCÈS

(30) Priorität: 05.03.2007 CH 3522007
(43) Veröffentlichungstag der Anmeldung: 14.03.2012
(62) Teilanmeldung aus: 08706387.1
(73) Patentinhaber: dormakaba Schweiz AG, 8620 Wetzikon (CH)
(72) Erfinder: Häberli, Andreas, 8608 Bubikon (CH)
(74) Vertreter: Balder IP Law, S.L.

(56) Entgegenhaltungen:
- EP-A2- 0 990 756
- US-A- 4 591 854
- US-A- 6 064 316

## Beschreibung

Die Erfindung betrifft das Gebiet der Zugangs- und Zugriffskontrolle, insbesondere der Zugangskontrolle zu Gebäuden und zu Räumen innerhalb von Gebäuden.

Klassisch erfolgt die Zugangskontrolle zu Gebäuden oder anderen Objekten mittels mechanisch codierten Schlüsseln, deren mechanische Codierung gewisse Berechtigungen des Schlüsselträgers widerspiegelt - bspw. die Berechtigung eines Benutzers, sich durch Öffnen einer Türe zu einem Gebäude Zutritt zu verschaffen oder ein Auto zu fahren. Von wachsender Bedeutung ist die elektronische Zugangs- oder Zugriffskontrolle, bei welcher Daten zwischen einem Datenträger des Benutzers und einer Datenverarbeitungseinrichtung ausgetauscht werden und die Zugangs- oder Zugriffsberechtigung aufgrund der Resultate des Datenaustauschs ermittelt wird. Der Datenaustausch kann dabei auf irgendeine bekannte Art erfolgen, bspw. über elektrische Signale, optisch, oder über Induktion oder elektromagnetische Wellen (bspw. RFID).

Es ist auch bereits bekannt, für die Zugangs- und/oder Zugriffskontrolle über die kapazitive Kopplung (manchmal auch als kapazitiv-resisitive Kopplung, "intrabody"-Kopplung oder PAN-Kopplung bezeichnet) zu verwenden. Bei dieser werden zwischen einem Sender (Transmitter) und einem Empfänger im menschlichen Körper kleine Ströme erzeugt, die zur Informationsübertragung zwischen dem Transmitter und dem Empfänger benutzt werden.
Diese Art der Kopplung ist in den US-Patentschriften 4,591,854, 5,914,701 und 5,796,827 offenbart. Anwendungen davon sind in der internationalen Offenlegungsschrift WO 2007/036061 sowie in veröffentlichten Schriften verschiedener Inhaber beschrieben.
Besonders vorteilhaft an der kapazitiven Kopplung durch den menschlichen Körper ist die Selektivität der Datenübertragung. Je nach Konstellation kann man mit recht hoher Sicherheit bestimmen, dass das vom Empfänger empfangene Signal nur durch diejenige Person übertragen worden sein kann, die sich in unmittelbarer Nähe oder in physischem Kontakt zu einer dafür vorgesehenen Empfängerelektrode befindet.
Nachteilig ist unter anderem, dass aufgrund des schlechten Signal-Rauschverhältnisses (eigentlich: Signal-Interferenzverhältnisses) nur eine beschränkte Datenmenge übertragen werden kann. Ein gutes Signal-Rauschverhältnis ist nur bei einer grossen Amplitude des Übertragungssignals möglich. Eine grosse Amplitude (d.h. hohe Spannung) wird aber vom Benutzer eher nicht toleriert. In der internationalen Offenlegungsschrift WO 2007/112609 werden Lösungsansätze aufgezeigt, mit denen dieses Problem angegangen werden kann. Trotzdem bleibt die Bandbreite der Signalübertragung beschränkt.
Bei einer Anwendung für die Zugangskontrolle ist ausserdem die Installation eines Systems mit kapazitiv-resistiver Signalübertragung relativ aufwändig und es gibt keine Kompatibilität mit bestehenden Systemen. Daher hat sich diese Art der Zugangskontrolle bisher auf dem Markt noch nicht durchsetzen können.

Andere Zugangskontroll-Systeme mit elektronischen Schlüsseln sind zwar in ihren Anwendungen etabliert, werden von den Benutzern aber oft als unpraktisch oder gar lästig empfunden. So muss oft vor jedem Öffnen einer Türe ein Badge an einen dafür vorgesehenen Leser gehalten und die Freigabe der Türe abgewartet werden. Das stört insbesondere in Gebäuden, in denen auch die Innentüren abgesichert sind, den Arbeitsfluss und führt zu improvisierten Umgehungen des Systems - bspw. indem die Türen einfach permanent offengelassen werden, oft mit einfachsten Mitteln, bspw. dem Blockieren der Türe durch einen Gegenstand.
US 6,064,316 zeigt ein computerisiertes Zugangskontrollsystem. EP 0 990 756 beschreibt ein Zugangskontrollsystem mit mobilen Transpondern und lokalen Lesegeräten.
Es ist Aufgabe der Erfindung, Nachteile von Systemen gemäss dem Stand der Technik zu überwinden und insbesondere den Aufwand in der täglichen Handhabung möglichst klein zu halten.
Diese Aufgabe wird durch die Erfindung gelöst, wie sie in den Patentansprüchen definiert ist.

Das Zugangskontroll-System für ein Gebäude oder ein Gebäudeteil (Raum, Bereich, Gebäudeflügel etc.) weist bevorzugt eine Türe mit einer integrierten mechatronischen Schliessvorrichtung auf, wobei die Schliessvorrichtung eine Empfängereinrichtung aufweist, die dazu ausgebildet ist, von einem Sender ausgesandte und über einen Körper eines Benutzers übertragene kapazitiv-resistive Signale zu empfangen und auszuwerten, wobei die Schliessvorrichtung abhängig von einem Resultat dieser Auswertung die Türe freigibt oder nicht.

Ein solches System ermöglicht auch eine direkte, kurzreichweitige Kommunikation (nicht durch den Körper), bspw. durch Halten des Senders in die unmittelbare Nähe einer Empfängerelektrode, d.h. Anwendungen der Erfindung sind nicht auf die Kopplung durch den menschlichen Körper beschränkt sondern erstrecken sich auch auf Fälle, in denen der Benutzer das den Sender aufweisende Gerät vor sich trägt, in die Nähe einer Receiverelektrode hält oder sonstwie ermöglicht, dass die Kommunikation direkt und nicht ausschliesslich über den Körper zwischen Sender und Receiver erfolgt.

In Ausführungsformen der Erfindung ist die Schliessvorrichtung batteriebetrieben und frei von einer festen elektrischen Verbindung zu einem nicht an oder in der Türe befindlichen Objekt.
Mit anderen Worten ist in diesem Ausführungsformen die Türe eine "standalone"-Vorrichtung, die nicht mit anderen Einheiten verdrahtet werden muss und sowohl was die elektrische Versorgung als auch was den Empfang von Daten angeht, autonom ist.
Die Empfängereinrichtung ist wie erwähnt dazu ausgebildet, über einen Körper eines Benutzers übertragene kapazitiv-resistive Signale zu empfangen und auszuwerten. Das bedeutet, dass die Empfängereinrichtung genügend empfindlich sein muss, um solche über den Körper übertragene Signale zu empfangen. Es schliesst natürlich nicht aus, dass der Benutzer die Sendereinrichtung - sie kann als Smart-Card oder als Smart-Card-Cover oder sonstwie ausgebildet sein - direkt in die Nähe einer Empfängerelektrode der Empfängereinrichtung hält, wodurch das Signal also rein kapazitiv - "nur durch die Luft" - übertragen wird (um genau zu sein gibt es jeweils bspw. über die Raum-Erde noch einen zweiten Signalpfad (Signalrückführungspfad), der bspw. in der Schrift US4591854 beschrieben wird; dieser Rückführungspfad kann auch dann teilweise durch den Körper verlaufen, wenn der Vorwärtspfad direkt von der Sendereinrichtung zur Empfängereinrichtung, ohne Signalweg durch den Körper verläuft).

Die kapazitiv-resistive Informationsübertragung bringt den für die Zugangskontrolle sehr wichtigen Aspekt der Personenselektivität mit sich: Aufgrund der sehr kurzen Reichweite dieser Wechselwirkung ist praktisch sichergestellt, dass die Person, die sich in unmittelbarer Nähe der Empfängerelektrode - diese wird bspw. durch einen metallischen Türdrücker oder Türbeschlag gebildet - befindet, auch die ist die den Sender trägt, von dem Daten empfangen werden, oder mit ihm in Berührung steht. Trotzdem ist im Unterschied zum klassischen mechanischen oder mechatronischen Schlüssel - bei denen gibt es diese Art von Personenselektivität natürlich auch - nicht nötig, dass der Benutzer den Schlüssel umständlich aus der Tasche holt und während des Aufschliessens seine Schritte anhalten muss.

Dieser Ansatz hat nun den grossen Vorteil, dass eine mechatronische Schliessvorrichtung mit Empfängereinrichtung ohne zusätzlichen Aufwand in bestehenden Objekten verwendet und sogar in bestehende Türen eingebaut werden kann, bspw. als kompakter Schliesszylinder und/oder Türbeschlag, der als ganzes und bspw. in einer normierten Grösse an der Tür montierbar ist. Eventuell ist auch der Umbau eines bestehenden mechatronischen Systems in ein erfindungsgemässes mechatronisches System möglich. Insbesondere ist keine Verdrahtung der Türe notwendig, was recht aufwändig wäre. Dies ist insbesondere für Anwendungen vorteilhaft, in welchem die Türe bspw. die Türe eines Innenraums ist, die nicht den höchsten Sicherheitsanforderungen genügen muss, die nicht ohnehin verdrahtet ist und die auch einigermassen kostengünstig sein muss.

Der Sender ist für viele Anwendungen ein portables Gerät, welches durch den Benutzer in der Tasche getragen werden kann oder der als ,Badge' an einem Kleidungsstück befestigt oder als Armbanduhr getragen werden kann. Er kann aber auch relativ zur Türe ortsfest und so angebracht sein, dass der Benutzer während des Türöffnungs-Vorgangs ein Körperteil in dessen Nähe bringt und/oder ihn teilweise berührt.

Die Schliessvorrichtung kann ein Betätigungselement, beispielsweise einen Türdrücker oder Türknauf, aufweisen, mit welchem eine Schlossfalle betätigbar ist, wobei die Schlossfalle entweder blockiert oder das Betätigungselement von der Schossfalle entkoppelt ist, wenn die Türe nicht freigegeben ist.

Die Schliessvorrichtung kann ein Riegelelement aufweisen und das Riegelelement kann die Türe gegen einen Türrahmen sperren, wenn die Türe nicht freigegeben ist.

Die Schliessvorrichtung kann zusätzlich einen unabhängig vom Empfang der kapazitiv-resistiven Signale funktionierenden mechanischen oder mechatronischen Schliesszylinder aufweisen.

Die Türe kann einen metallischen Beschlag aufweisen. Dabei kann optional der metallische Beschlag so elektrisch kontaktiert sein, dass er als Empfängerelektrode der Empfängereinrichtung dient. Alternativ dazu oder gleichzeitig kann optional der Beschlag eine Oberfläche bildem, die frei von nicht-metallischen Oberflächenabschnitten ist.

Die Schliessvorrichtung kann äusserlich so bemessen sein, dass sie als Schliesszylinder in einer normierten Schliesszylinderöffnung einer Tür montierbar ist.

Gemäss der Erfindung wird ein System zur Verwendung für die Zugangskontrolle zu einem Gebäude mit Aussentüren und Innentüren zur Verfügung gestellt, welches mindestens eine erste Schliessvorrichtung und eine Mehrzahl von zweiten Schliessvorrichtungen aufweist, wobei die erste Schliessvorrichtung bzw. mindestens eine der ersten Schliessvorrichtungen zur Ver- und Entriegelung einer Aussentüre angebracht ist und die zweiten Schliessvorrichtungen zur Ver- und Entriegelung von Innentüren angebracht sind, und wobei die mindestens eine erste Schliessvorrichtung erste Mittel zum Empfangen von Informationen von dem Benutzer aufweist und die zweiten Schliessvorrichtungen zweite Mittel zum Empfangen von Informationen durch den Benutzer aufweisen. Das System zeichnet sich nun dadurch aus, dass die zweiten Mittel einen Empfänger von durch den Körper des Benutzers übermittelten kapazitiv-resistiven Signalen aufweist und dass die ersten Mittel von den zweiten Mitteln verschieden sind.

Dem liegt der Ansatz zu Grunde, dass auch im Innern von Gebäuden der Zugang zu Räumen verwaltet werden muss, dass aber aus Komfortgründen nicht für jede Türe die höchste Sicherheitsstufe gelten muss. Beispielsweise ist es mühsam, wenn für jede Türe im Innern eines Gebäudes der Benutzer aktiv einen Schlüssel hervornehmen und die Türe entriegeln muss. In Gebäuden, in denen das der Fall ist, werden Innentüren oft nachlässig offengelassen, was der Sicherheit abträglich ist. Dank dem erfindungsgemässen Ansatz ist es insbesondere möglich, dass für den Benutzer ein natürlicher Bewegungsablauf möglich ist. Wenn er einen ständig aktiven Transmitter für die kapazitiv-resistive Kommunikation in der Tasche oder am Körper trägt und auf eine Türe zugeht, wird die Schliessvorrichtung ein Signal vom Transmitter empfangen, sobald sich ein Körperteil des Benutzers in unmittelbarer Nähe der entsprechenden Empfängerelektrode - diese wird wie in den vorstehenden Beispielen bspw. durch einen Türdrücker oder Türbeschlag gebildet - befindet. Da eine Übertragung von hohen Datenmengen nicht notwendig ist, können die Informationsübertragung und die nachfolgende Freischaltung innert weniger Sekundenbruchteile erfolgen und abgeschlossen sein, wenn der Benutzer den Türdrücker betätigt. Insbesondere muss der Benutzer weder einen Gegenstand aus der Tasche nehmen noch einen Badge an eine entsprechende Fläche halten noch sonstwie in seinem Bewegungsablauf innehalten. Für ihn erscheint die Türe als von Anfang an offen.

Natürlich ist ein entsprechendes Vorgehen auch bei Türen möglich, die sich automatisch öffnen (bspw. Schiebetüren); wobei dann die entsprechenden Vorgänge vorzugsweise so schnell ablaufen, dass der Benutzer in normalem Schritt durch die Türe gehen kann, ohne dass er warten muss, bis sich die Türe geöffnet hat.

Das vom Benutzer zum Öffnen der Innentüren zu verwendende Entriegelungsmittel kann einen Transmitter für die kapazitiv-resistive Informationsübertragung aufweisen. Es kann optional zusätzlich Mittel beinhalten, die ersten Schliessvorrichtungen zu betätigen (nur ein Schlüssel für Aussen- und Innentüren notwendig). Beispielsweise kann es als Karte ausgebildet sein, die auf für die RFID-Identifikation verwendet werden kann, oder es kann als Schlüssel vorliegen, der auch mechanische Codierungen und/oder einen Identifikationschip für RFID- oder andere elektronische Identifikation aufweist. Wenn das Entriegelungsmittel als Schlüssel mit mechanischen Codierungen vorliegt, kann eine metallische, die mechanischen Codierungen aufweisende Fläche gleich auch als Elektrode für die berührungslose Kommunikation fungieren. Natürlich kann das Entriegelungsmittel auch mit weiteren Funktionalitäten kombinierbar sein und bspw. als Mobiltelefon, Uhr etc. ausgebildet sein.

Es kann auch vorgesehen sein, dass erste Entriegelungsmittel (zum Betätigen der ersten Schliessvorrichtungen) und zweite Entriegelungsmittel (zum Betätigen der zweiten Schliessvorrichtungen) voneinander separat sind. Speziell kann auch das genannte zweite Entriegelungsmittel mit dem Transmitter als Hülle für eine Identifikationskarte (die bspw. als erstes Entriegelungsmittel für die Betätigung der ersten Schliessvorrichtungen verwendet werden kann) ausgebildet ist, wobei optional eine Schnittstelle zwischen der Hülle und der Identifikationskarte vorhanden sein kann. Eine entsprechende Lehre findet man bspw. in den internationalen Patentanmeldungen PCT/CH 2008/000057, PCT/CH 2008/000058 und PCT/CH 2008/000059 des Anmelders des vorliegenden Schutzrechts.

Die zweiten Mittel bestehen vorzugsweise nur aus einem Empfänger für kapazitvresistive Signale, d.h. vorzugsweise werden die zweiten Schliessvorrichtungen nur durch durch den Körper übermittelbare, kapazitiv-resistive Signale geöffnet. Es ist dann nicht notwendig, dass der Benutzer noch auf andere Arten entriegelt.

Besonders bevorzugt ist das System in einem halböffentlichen Gebäude vorhanden. Halböffentliche Gebäude sind Gebäude, zu denen mindestens zu gewissen Zeiten jedermann Zutritt hat, die aber Räume aufweisen, für die diese Zutrittsberechtigung nicht gilt. Beispiele für halböffentliche Gebäude sind Spitäler, Amtsgebäude (Gerichtsgebäude, Verwaltungsgebäude), Hotels etc. In solchen Gebäuden hat das erfindungsgemässe Vorgehen spezielle Vorteile. Auch ist es von Vorteil, dass zweite Schliessvorrichtungen mit einem Empfänger für die kapazitiv-resistiven Signale relativ einfach in bestehende Türen oder zumindest Türen, die in vorgegebenen Gebäuden nachträglich eingebaut werden können, verwendbar sind. Es ergibt sich eine sehr gute Nachrüstbarkeit. Bestehende Gebäude können sehr gut nachträglich mit einem erfindungsgemässen System versehen werden.

Die Erfindung betrifft dementsprechend auch ein bspw. halböffentliches Gebäude mit einem entsprechenden System.

Die ersten Schiessvorrichtungen können konventionell mechanisch (Betätigung durch mechanisch codierte Schlüssel) ausgebildet sein. Dann sind die ersten Mittel zum Empfangen von Informationen Mittel zum mechanischen Auslesen der Schlüssel, also bspw. Zuhaltungs-Gegenzuhaltungspaare Die ersten Schliessvorrichtungen können auch elektronisch (bspw. Betätigung durch Informationsaustausch mit einem elektronischen Schlüssel), oder mechanischelektronisch ausgebildet sein. Auch eine Kombination mit einem Empfänger für kapazitiv-resistive Signale ist denkbar; hingegen bestehen die ersten Mittel vorzugsweise nicht nur aus einem solchen Empfänger, sondern es wird (auch) Information über einem anderen Kanal ausgetauscht.

Es kann selbstverständlich vorgesehen sein, dass die ersten Schliessvorrichtungen nicht immer aktiviert sind. Beispielsweise können Aussentüren des (bspw. halböffentlichen) Gebäudes tagsüber ständig offen sein und nur die Innentüren ggf. verriegelt sein.

In Ausführungsformen weist eine Schliessvorrichtung eine äussere Empfängerelektrode und eine mit dieser elektrisch nicht parallel geschaltete innere Empfängerelektrode auf. Die äussere Empfängerelektrode ist bei geschlossener Türe von ausserhalb des Objekts zugänglich, die innere Elektrode von innerhalb des Objekts. Die Elektroden sind vorzugsweise an der Türe selbst (an deren Aussen- bzw. Innenseite, bspw. gebildet durch Beschlag, Türdrücker etc.) vorhanden, können sich aber auch in unmittelbarer Nähe befinden, bspw. am oder beim Türrahmen. Sowohl die innere als auch die äussere Empfängerelektrode sind Empfängerelektroden eines Empfängers für durch den Körper des Benutzers übermittelte kapazitiv-resistive Signale. In diesen Ausführungsformen ist nun das System so ausgebildet, dass die Schliessvorrichtung in einen ersten Entriegelungszustand übergeht, wenn ein passendes kapazitiv-resistives Signal durch die äussere Elektrode empfangen wird, und in einen zweiten Entriegelungszustand übergeht, wenn ein passendes - bspw. dasselbe - kapazitiv-resistives Signal über die innere Elektrode empfangen wird. Der erste und der zweite Entriegelungszustand sind verschieden voneinander. Insbesondere kann im ersten Entriegelungszustand die Türe nach einem wiederverschliessen verriegelt sein, während im zweiten Entriegelungszustand die Türe permanent - d.h. bis ein Signal über die der äusseren Elektrode empfangen wird oder bis die Türe aufgrund anderer Vorgänge, bspw. aktiv vom Benutzer, geschlossen wird - offen ist.

Das Objekt, zu dem die Zugangskontrolle durch das Vorgehen gemäss diesen Ausführungsformen geregelt wird, ist bspw. ein Raum im Innern eines Gebäudes. Dem Vorgehen gemäss diesen Ausführungsformen liegt der Gedanke zu Grunde, dass oft ein Berechtigter sich nach einem Zutritt zu einem Raum in diesem Raum aufhält. Es kann wünschenswert sein, dass Dritte - die vielleicht an sich zum Zutritt in den leeren Raum nicht berechtigt wären - den Raum betreten können, bspw. nach vorherigem Anklopfen. Wenn das der Fall ist, muss der sich im Raum aufhaltende Berechtigte nicht aktiv die Türe betätigen, um eine Zutritt wünschende Person hereinzulassen. Auch muss keine aufwändige vom Berechtigten zu steuernde Türöffnungseinrichtung vorgesehen sein. Es ist daher wünschenswert, dass das System erkennt, dass ein Berechtigter im Raum ist. Da der Berechtigte die Tür von innen schliesst, nachdem er sich Zutritt zum Raum verschafft hat, hat er als letztes die Türe innen berührt. Durch das erfindungsgemässe Vorgehen dient das als Anzeichen dafür, dass der Benutzer sich im Innern des Raums befindet. Wenn er den Raum verlässt, berührt er als letztes die Türe auf ihrer Aussenseite. Dann wird die Schliessvorrichtung in den ersten Entriegelungszustand überführt, und der nicht Berechtigte hat keinen Zutritt zum Raum.

Dieses Vorgehen eignet sich insbesondere für Räume, in denen sich im Allgemeinen nur eine einzige Person aufhält - also bspw. Einzelbüros.

Im Folgenden werden Ausführungsbeispiele der Erfindung anhand von schematischen Zeichnungen noch etwas näher erläutert. In den Zeichnungen zeigen:
- Fig. 1 eine Ansicht eines Türbeschlags mit Türdrücker, der als Empfängerelektrode fungiert;
- Fig. 2 eine Darstellung einer Türe mit einer integrierten mechatronischen Schliessvorrichtung;
- Fig. 3 ein portables Gerät mit Transmitter;
- Fig. 4 ein Schema einer Empfängeranordnung mit äusserer und innerer Empfängerelektrode;
- Fig. 5a und 5b Flussdiagramme für ein Vorgehen gemäss Ausführungsformen Erfindung.

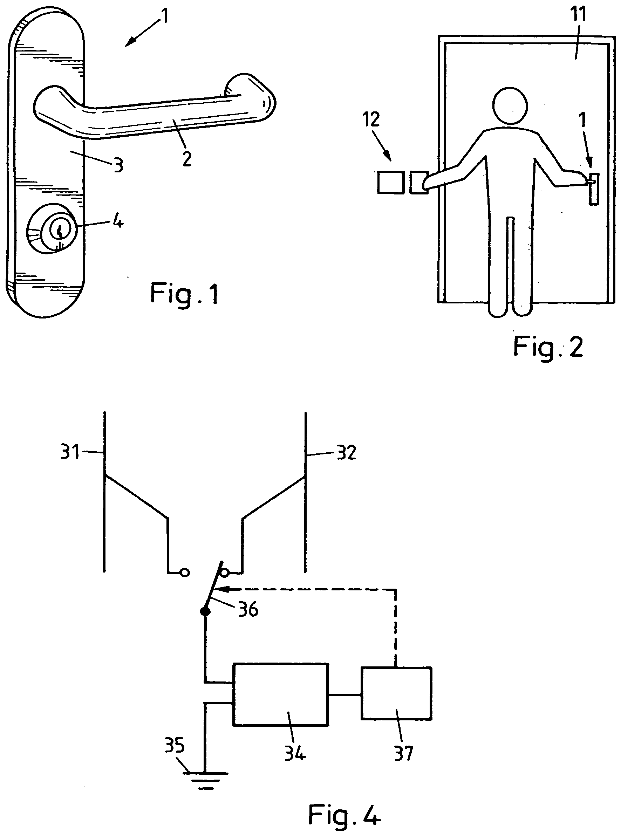

Der in **Figur 1** dargestellte Türbeschlag 1 einer nicht dargestellten Türe kann äusserlich konventionell ausgestaltet sein und bspw. im Wesentlichen aus metallischen Komponenten bestehen. Er weist eine integrierte mechatronische Schliessvorrichtung auf. Diese verhindert, dass die Türe geöffnet wird, ohne dass vorgängig die Berechtigung des Zutritt Begehrenden elektronisch geprüft wird. Beispielsweise kann in der Türe oder im Türrahmen ein elektrisch betätigtes Riegelelement vorhanden sein, das die Türe elektronisch gesteuert freigibt. Alternativ dazu kann der Türdrücker durch ein elektrisch angetriebenes Sperrglied gesperrt bzw. freigegeben werden. Als noch weitere Alternative kann eine Kupplung zwischen dem Türdrücker und einer Schlossfalle oder einem Riegel ein- oder ausgeschaltet werden. Wenn die Kupplung im Grundzustand ausgeschaltet ist, kann der Türdrücker zwar betätigt werden, das bleibt aber ohne Wirkung. Weitere Möglichkeiten der Sperrung bzw. Freigabe der Tür sind denkbar.

Die Schliessvorrichtung ist mit einer Empfängereinrichtung versehen, die Mittel aufweist, ein durch den Körper eines Benutzers übertragenes kapazitiv-resistives Signal zu empfangen und auszuwerten. Die Freigabe oder nicht-Freigabe der Türe erfolgt dann unter Verwendung des Resultats dieser Auswertung. Zu diesem Zweck ist an der Türe oder in deren unmittelbarer Nähe eine Empfängerelektrode vorhanden. Im gezeichneten Ausführungsbeispiel wird die Empfängerelektrode durch den elektrisch leitenden, nämlich metallischen Türdrücker 2 gebildet, der vom restlichen Beschlag elektrisch isoliert ist. Die übrigen Teile der Schliessvorrichtung sind in der Figur nicht gezeichnet. Die Empfängereinrichtung kann bspw. gemäss der WO 2007/112609 ausgestaltet sein, und die mechatronische Verriegelungs- und/oder Kupplungseinrichtung kann gemäss einem an sich bekannten Prinzip ausgestaltet sein, bspw. wie in EP 1 576 246 beschrieben.

Die Schliessvorrichtung kann insbesondere frei von einer festen Verdrahtung mit Teilen sein, die nicht an der Türe vorhanden sind. Die Türe kann daher mit an sich konventionellen Türangeln befestigt sein. Die Schliessvorrichtung weist ein Batteriefach mit Batterie auf, die bspw. einfach zugänglich ist, z.B. durch Entfernen der Beschlags-Abdeckung 3.

Optional kann noch eine zusätzliche mechanische Verriegelungsvorrichtung - im gezeichneten Beispiel ein mechanischer Schliesszylinder 4 - und/oder eine zusätzliche elektronische Verriegelungsvorrichtung vorhanden sein.

Der Transmitter, der die vom Empfänger zu empfangenden Daten durch den Körper des Benutzers aussendet, kann portabel sein und vom Benutzer in einer Tasche oder der als Badge an einem Kleidungsstück befestigt oder bspw. als Armbanduhr oder Mobiltelefon getragen werden.

Nebst dem Empfänger für die kapazitiv-resistiven Signale kann auch ein Sender vorhanden sein, so dass auch kompliziertere Kommunikationsschemata zwischen der Tür und einem vom Benutzer getragenen portablen Gerät - bspw. mit Datenverschlüsselungsalgorithmen und/oder Protokollierung - möglich sind. Hier wird bspw. auf die WO 2007/036 061 verwiesen.

In Ausführungsformen kann der Türbeschlag oder gar die ganze Türe metallisch sein. Der Türbeschlag kann insbesondere frei von nicht-metallischen Oberflächenabschnitten, Aussparungen oder dergleichen sein, und ein metallisches Element kann - bis auf eventuelle Öffnungen, in die Türdrücker-Schaft, Schliesszylinder (jeweils im Wesentlichen metallisch) und/oder dergleichen eingeführt sind - die ganze Beschlagfläche überziehen; dies schliesst nicht aus, dass das metallische Element von einer nicht-metallischen Schicht - bspw. Oxidschicht - überzogen ist. Dies ist im Unterschied zu Türbeschlägen für Türen RFID-Identifikations-Schliessvorrichtungen. Bei letzteren darf mindestens am Ort der RFID-Antenne des entsprechenden Lesers der Beschlag - dieser weist oft eine flächige Grundplatte auf, die nur für den Schliesszylinder und den Schaft des Türdrückers je eine Öffnung aufweist - nicht metallisch sein.

Im Gegensatz dazu kann der Beschlag für ein System gemäss der Erfindung im Wesentlichen - bis auf isolierende Elemente zwischen der Elektrode und den anderen Teilen des Beschlags - metallisch sein. Das ist aus ästhetischen Gründen vorteilhaft; auch kann die Existenz einer elektronischen Einheit in der Schliessvorrichtung diskret kaschiert werden. Insbesondere kann ein Beschlag für ein System gemäss der Erfindung eine Grundplatte aufweisen, die metallisch und im Wesentlichen flächig ist und nur an den Positionen des Türdrückers (oder des Türknaufs etc.) und gegebenenfalls des Schliesszylinders entsprechende passende Öffnungen aufweist.

**Figur 2** zeigt eine Türe 11 mit einer integrierten mechatronischen Schliessvorrichtung, die Teil eines Zugangskontrollsystems ist. Die Türe und die Schliessvorrichtung können bspw. wie die anhand von Figur 1 beschriebene Türe und Schliessvorrichtung ausgestaltet sein. Alternativ dazu kann die Schliessvorrichtung eine feste Verdrahtung aufweisen und durch diese bspw. mit Strom versorgt und/oder programmierbar sein. Nebst der im Beschlag 1 integrierten mechatronischen Schliessvorrichtung ist ein Gerät 12 vorhanden, welches nebst einem Transmitter für kapazitiv-resistive Signale auch einen Leser aufweist. Dieser ist dazu ausgebildet, Identifikationssignale von einem beliebigen Identifikationsmedium auszulesen, bspw. von einer kontaktbehafteten oder kontaktlosen Chipkarte 13 oder einem in ein anderes Gerät integrierten Identifikationsmedium. Alternativ oder ergänzend dazu kann der Leser auch zum Erkennen biometrischer Merkmale ausgebildet sein, bspw. als thermischer Fingerprintleser, als Kamera mit Auswerteeinheit zum Erkennen von Gesichtsmerkmalen und/oder Iris-Merkmalen etc. Beim Betätigen des Systems bringt der Benutzer das Identifikationsmedium mit dem Leser in Berührung oder hält es in dessen Nähe und/oder bringt ein Körperteil in Berührung mit dem Leser oder positioniert es in dessen Nähe. Als Folge davon werden die vom Transmitter nach Betätigung des Lesers bei erfolgreicher Erkennung des Benutzers (bzw. von dessen Identifikationsmedium und/oder von einem von ihm eingegebenen PIN-Code) ausgesandten Signale in den Körper eingekoppelt und von der Empfängereinrichtung in der oder an der Türe empfangen. Es kann eine Freigabe der Türe erfolgen.

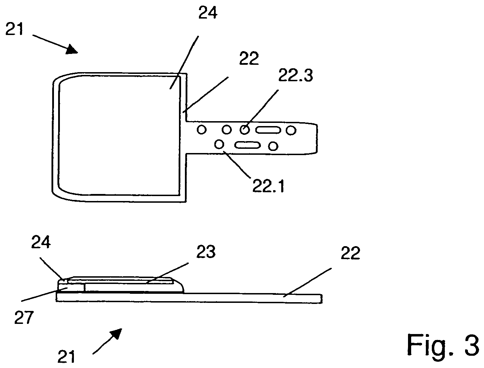

Das in **Figur 3** wiedergegebene portable Gerät ist ein Beispiel für ein Hybridgerät, welches in einem erfindungsgemässen Zugangskontrollsystem optional Verwendung finden kann. Das Gerät ist als Schlüssel ausgebildet, welcher sowohl zum Betätigen der ersten Schliessvorrichtungen als auch zum Betätigen der zweiten Schliessvorrichtungen ausgebildet ist. Die Figur zeigt das portable Gerät 21 in Draufsicht und in einer Schnittdarstellung.

Zur Betätigung der ersten Schliessvorrichtungen weist der Schlüssel 21 ein metallisches Schlüssel-Basisteil 22 auf, an welchem ein Schlüsselschaft 22.1 ausgebildet ist. Der Schlüsselschaft kann in an sich bekannter Art Codierungsbohrungen 22.3 aufweisen, welche mit entsprechenden mechanischen Zuhaltungen eines Schliesszylinders der ersten Schliessvorrichtungen zusammenwirken. Auch andere Codierungseinrichtungen können alternativ oder ergänzend dazu am Schlüssel vorhanden sein. Weiter ist im dargestellten Beispiel ein Identifikations-Chip 27 - bspw. ein LEGIC®-Chip - vorhanden, welcher bspw. durch ein Radiofrequenzsignal auslesbar ist und ebenfalls für die Betätigung der ersten Schliessvorrichtungen verwendet werden kann.

Das Schlüssel-Basisteil 22 dient nebst seiner Zylinderöffnungsfunktion gleichzeitig als erste Elektrode für die kapazitiv-resistive Signalübertragung, die zur Betätigung der zweiten Schliessvorrichtungen benötigt wird. Die zweite Elektrode 23 ist im Innern eines Schlüsselgehäuses 24 angeordnet, welches auch die notwendige Elektronik (nicht gezeichnet) für die Speicherung, den Empfang und/oder das Versenden von Daten aufweist sowie ggf. Antennenelemente etc. aufweist.

Zwischen dem Identifikations-Chip und dem Transmitter kann eine Kommunikationsverbindung bestehen, bspw. über eine zentrale Elektronik und/oder Datenverarbeitungseinheit und/oder über eine Schnittstelle, bspw. eine I²C-Schnittstelle.

Natürlich kann bei Ausführungsformen der Erfindung auch vorgesehen sein, dass für die ersten und die zweiten Schliessvorrichtungen voneinander separate mechanische und/oder elektronische Schlüssel verwendet werden, d.h. die Verwendung eines Hybridgeräts ist nicht notwendig.

In Ausführungsformen der Erfindung weist ein System für die Zugangskontrolle eine Türe auf, bei der sowohl einer äusseren Seite als auch einer inneren Seite je eine Empfängerelektrode zugeordnet ist. **Figur 4** zeigt ein stark vereinfachtes Schema einer solchen Anordnung mit einer äusseren Empfängerelektrode 31 und einer inneren Empfängerelektrode 32. Im Gezeichneten Ausführungsbeispiel ist nur ein einziger Empfänger (Receiver) 34 für die kapazitiv-resistiven Signale gezeichnet. Dieser detektiert die Signale zwischen der äusseren bzw. inneren Empfängerelektrode und einer Referenzelektrode, die im gezeichneten Beispiel durch die Erdung 35 gebildet wird. Mittels eines Schalters 36 wird zwischen der äusseren 31 und der inneren Elektrode geschaltet, wobei der Schalter bspw. periodisch mit einer Frequenz von bspw. einigen Hz betätigt werden kann, so dass sowohl die innere Elektrode als auch die äussere Elektrode im Wesentlichen ständig ausgelesen werden. Es kann auch vorgesehen sein, dass der Schalter nach einer Logik gesteuert wird.

Als Alternative kann auch vorgesehen sein, dass sowohl der Innenseite als auch der Aussenseite je ein Empfänger zugeordnet ist.

Der Empfänger (bzw. die Empfänger) steht (stehen) in Kommunikationsverbindung mit einer Schliessvorrichtungs-Elektronik 37. Der Empfänger/die Empfänger kann/können natürlich auch in diese integriert sein. Die Schliessvorrichtungs-Elektronik steuert einen elektrischen Antrieb, der bei Bedarf die Türe freigibt.

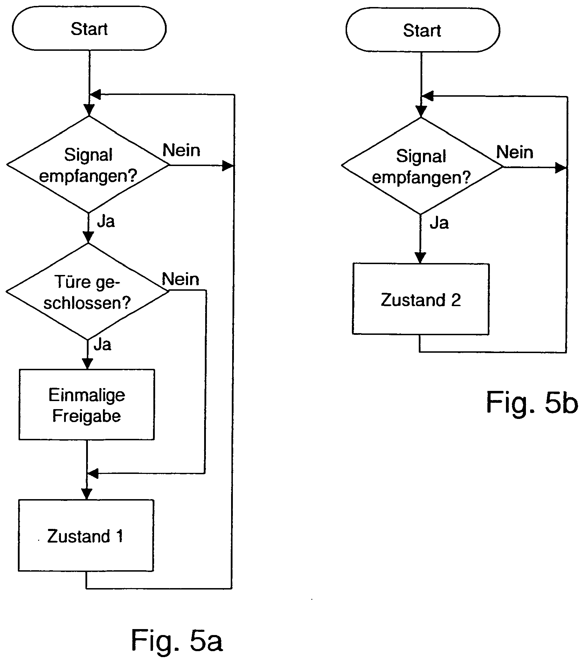

In **Figuren 5a und 5b** sind Flussdiagramme für das Vorgehen gemäss einer entsprechenden Ausführungsform dargestellt. Fig. 5a bezieht sich auf die äussere Elektrode, Fig. 5b auf die innere Elektrode. Bei beiden Elektroden wird in der dargestellten Ausführungsform ständig überwacht, ob ein passendes kapazitiv-resistives Signal empfangen wird (Kasten "Signal empfangen?"; die entsprechenden Verfahrensschritte beziehen sich auf den Empfang eines passenden Signals, schliessen also den Abgleich mit abgespeicherten Daten und/oder andere Datenanalyse- und/oder -verarbeitungsschritte mit ein).

Bei Detektion eines passenden Signals via die äussere Empfängerelektrode (Fig. 5a) wird in der dargestellten Variante zunächst geprüft, ob die Türe noch geschlossen ist. Wenn das der Fall ist, liegt die Situation vor, dass ein Berechtigter von Aussen Zugang zum Objekt begehrt. Dann wird die Türe freigegeben. Gleichzeitig oder anschliessend wird die Schliessvorrichtung in den ersten Entriegelungszustand gebracht, oder, sofern sie sich schon in diesem befindet, wird dieser bestätigt. Im ersten Entriegelungszustand wird die Türe nur freigegeben, wenn ein passendes Signal über die äussere Elektrode empfangen wird. Wenn die Türe schon offen war, kann die Situation vorliegen, dass ein Berechtigter daran ist, das Objekt zu verlassen und die Schliessvorrichtung vorher im zweiten Entriegelungszustand war. Dann wird die Schliessvorrichtung ebenfalls in den ersten Entriegelungszustand gebracht.

Es kann auch vorgesehen sein, dass die Unterscheidung geschlossene Tür/offene Tür entfällt. In dieser einfacheren Variante wird bei Empfang eines passenden Signals durch die äussere Elektrode auf jeden Fall die Schliessvorrichtungs-Elektronik aktiviert, die Tür freizugeben (und bspw. ein Riegelelement zurückzuziehen oder den Türdrücker mit der Schlossfalle zu kuppeln).

Bei Empfang eines passenden Signals durch die innere Elektrode (Fig. 5b) wird die Schliessvorrichtung in den zweiten Entriegelungs-Zustand überführt. In diesem ist die Tür permanent offen, d.h. bspw. das Riegelelement permanent in der nichtsperrenden Position und/oder der Türdrücker permanent an die Schlossfalle gekuppelt etc.)

Es können noch Massnahmen für den Fall vorgesehen sein, dass sowohl von der Aussenseite als auch von der Innenseite her ein passendes Signal empfangen wird. Beispielsweise kann der Empfang eines Signals über die innere Empfängerelektrode prioritär behandelt werden, d.h. immer wenn von innen ein passendes Signal empfangen wird, geht das System in den zweiten Entriegelungszustand über. Andere Möglichkeiten, die auch einen Vergleich der Signalstärken mit einschliessen können, sind denkbar.

## Patentansprüche

1. Verwendung eines Zugangskontrollsystems mit mindestens einer ersten Schliessvorrichtung und einer Mehrzahl von zweiten Schliessvorrichtungen als System für die Zugangskontrolle zu einem Gebäude mit mindestens einer Aussentüre und mit Innentüren, wobei die erste Schliessvorrichtung bzw. mindestens eine der ersten Schliessvorrichtungen zur Ver- und Entriegelung einer Aussentüre angebracht ist und die zweiten Schliessvorrichtungen zur Ver- und Entriegelung von Innentüren angebracht sind, und wobei die mindestens eine erste Schliessvorrichtung erste Mittel zum Empfangen von Informationen von dem Benutzer aufweist und die zweiten Schliessvorrichtungen zweite Mittel zum Empfangen von Informationen durch den Benutzer aufweisen, **dadurch gekennzeichnet, dass** die zweiten Mittel einen Empfänger (34) von durch den Körper des Benutzers übermittelten kapazitiv-resistiven Signalen aufweist und dass die ersten Mittel von den zweiten Mitteln verschieden sind.

2. Verwendung nach Anspruch 1, **dadurch gekennzeichnet, dass** das Gebäude ein halböffentliches Gebäude ist.

3. Verwendung nach Anspruch 1 oder 2, **dadurch gekennzeichnet, dass** das System erste Entriegelungsmittel zum Betätigen der ersten Schliessvorrichtungen und davon separate zweite Entriegelungsmittel zum Betätigen der zweiten Schliessvorrichtungen aufweist.

4. Verwendung nach einem der Ansprüche 1 bis 3, **dadurch gekennzeichnet, dass** die ersten Schliessvorrichtungen frei von einem Empfänger für durch den Körper übertragene kapazitiv-resistive Signale sind und auch nicht in Kommunikationsverbindung mit einem solchen Empfänger stehen.

5. Verwendung nach einem der vorangehenden Ansprüche, **gekennzeichnet durch** Entriegelungsmittel, welche einen Transmitter für die kapazitiv-resistive Informationsübertragung aufweisen.

6. Verwendung nach Anspruch 5, **dadurch gekennzeichnet, dass** die Entriegelungsmittel zusätzlich Mittel aufweisen, die ersten Schliessvorrichtungen zu betätigen.

7. Verwendung nach Anspruch 6, **dadurch gekennzeichnet, dass** das Entriegelungsmittel als Schlüssel (21) vorliegt, welcher auch mechanische Codierungen (22.3) und/oder einen Identifikationschip (27) für RFID- oder andere elektronische Identifikation aufweist.

8. Verwendung nach einem der vorangehenden Ansprüche, **dadurch gekennzeichnet, dass** die zweiten Schliessvorrichtungen eine Entriegelung allein durch kapazitiv-resistive Signale ermöglicht, ohne dass ein Benutzer auf andere Arten entriegelt.

9. Verwendung nach einem der vorangehenden Ansprüche, **dadurch gekennzeichnet dass** die zweiten Schliessvorrichtungen mechatronische Schliessvorrichtungen und batteriebetrieben sind und frei von einer festen elektrischen Verbindung zu einem nicht an oder in der Türe befindlichen Objekt sind.

10. Verwendung nach einem der vorangehenden Ansprüche, **dadurch gekennzeichnet, dass** die zweiten Schliessvorrichtungen eine äussere Empfängerelektrode (31) und eine mit dieser elektrisch nicht parallel geschaltete innere Empfängerelektrode (32) aufweisen, wobei die äussere Empfängerelektrode (31) bei geschlossener Türe von ausserhalb des Objekts und die innere Empfängerelektrode (32) von innerhalb des Objekts zugänglich ist, und dass die zweiten Schliessvorrichtungen in einen ersten Entriegelungszustand übergehen, wenn ein passendes kapazitiv-resistives Signal durch die äussere Elektrode (31) empfangen wird, und in einen davon verschiedenen zweiten Entriegelungszustand übergehen, wenn ein passendes kapazitiv-resistives Signal über die innere Elektrode (32) empfangen wird.

11. Verwendung nach Anspruch 10, **dadurch gekennzeichnet, dass** die Türe im zweiten Entriegelungszustand permanent offen ist.

12. Gebäude mit mindestens einer Aussentüre und mit Innentüren, aufweisend ein System für die Zugangskontrolle, wobei das System mindestens eine ersten Schliessvorrichtung und eine Mehrzahl von zweiten Schliessvorrichtungen aufweist, wobei die erste Schliessvorrichtung bzw. mindestens eine der ersten Schliessvorrichtungen zur Ver- und Entriegelung einer Aussentüre angebracht ist und die zweiten Schliessvorrichtungen zur Ver- und Entriegelung von Innentüren angebracht sind, und wobei die mindestens eine erste Schliessvorrichtung erste Mittel zum Empfangen von Informationen von dem Benutzer aufweist und die zweiten Schliessvorrichtungen zweite Mittel zum Empfangen von Informationen durch den Benutzer aufweisen, **dadurch gekennzeichnet, dass** die zweiten Mittel einen Empfänger von durch den Körper des Benutzers übermittelten kapazitiv-resistiven Signalen aufweist und dass die ersten Mittel von den zweiten Mitteln verschieden sind.

13. Gebäude nach Anspruch 12, **dadurch gekennzeichnet, dass** es als halböffentliches Gebäude ausgebildet ist.

## Claims

1. A utilization of an access control system having at least one first closing device and a plurality of second closing devices as a system for the access control to a building having at least one exterior door and having interior doors, wherein the first closing device, respectively at least one of the first closing devices is mounted for locking and unlocking an exterior door, and the second closing devices are mounted for locking and unlocking interior doors, and wherein the at least one first closing device includes first means for receiving information from the user, and the second closing devices include second means for receiving information by means of the user, **characterized in that** the second means include a receiver (34) of capacitive-resistive signals transferred by means of the body of the user, and **in that** the first means are different from the second means.

2. The utilization according to claim 1, **characterized in that** the building is a semi-public building.

3. The utilization according to claim 1 or 2, **characterized in that** the system includes first unlocking means for actuating the first closing devices and therefrom separate second unlocking means for actuating the second closing devices.

4. The utilization according to any of the claims 1 to 3, **characterized in that** the first closing devices are free from any receiver for capacitive-resistive signals transferred by means of the body of the user, and are not either in communication connection with such a receiver.

5. The utilization according to any of the preceding claims, **characterized by** unlocking means, which include a transmitter for the capacitive-resistive information transmission.

6. The utilization according to claim 5, **characterized in that** the unlocking means additionally include means for actuating the first closing devices.

7. The utilization according to claim 6, **characterized in that** the unlocking means are provided as a key (21), which also includes mechanical coding (22.3) and/or an identification chip (27) for RFID- or another electronic identification.

8. The utilization according to any of the preceding claims, **characterized in that** the second closing devices allow for an unlocking just by capacitive-resistive signals, without a user unlocking in any other way.

9. The utilization according to any of the preceding claims, **characterized in that** the second closing devices are mechatronic closing devices and battery-operated and are free from any fixed electrical connection to any object not located at or in the door.

10. The utilization according to any of the preceding claims, **characterized in that** the second closing devices include an exterior receiver electrode (31) and an interior receiver electrode (32), which is electrically not connected in parallel with the former, wherein, with the door being closed, the exterior receiver electrode (31) is accessible from outside the object and the interior receiver electrode (32) is accessible from inside the object, and **in that** the second closing devices transition into a first unlocking condition, when an appropriate capacitive-resistive signal is received by the exterior electrode (31), and transition into a second unlocking condition different therefrom, when an appropriate capacitive-resistive signal is received via the interior electrode (32).

11. The utilization according to claim 10, **characterized in that** in the second unlocking condition the door is permanently open.

12. A building with at least one exterior door and with interior doors, including a system for the access control, wherein the system includes at least one first closing device and a plurality of second closing devices, wherein the first closing device, respectively at least one of the first closing devices is mounted for locking and unlocking an exterior door, and the second closing devices are mounted for locking and unlocking interior doors, and wherein the at least one first closing device includes first means for receiving information from the user, and the second closing devices include second means for receiving information by means of the user, **characterized in that** the second means include a receiver of capacitive-resistive signals transferred by means of the body of the user, and **in that** the first means are different from the second means.

13. The building according to claim 12, **characterized in that** it is configured as a semi-public building.

## Revendications

1. Utilisation d'un système de contrôle d'accès avec au moins un premier dispositif de fermeture et une pluralité de deuxièmes dispositifs de fermeture comme système pour le contrôle d'accès à un bâtiment avec au moins une porte extérieure et avec des portes intérieures, le premier dispositif de fermeture respectivement au moins un des premiers dispositifs de fermeture étant installé pour le verrouillage et le déverrouillage d'une porte extérieure et les deuxièmes dispositifs de fermeture étant installés pour le verrouillage et le déverrouillage de portes intérieures, et ledit au moins un premier dispositif de fermeture comprenant des premiers moyens pour recevoir des informations de l'utilisateur, et les deuxièmes dispositifs de fermeture comprenant des deuxièmes moyens pour recevoir des informations par l'utilisateur, **caractérisée en ce que** les deuxièmes moyens comprennent un récepteur (34) de signaux capacitifs-résistifs transmis par le corps de l'utilisateur et **en ce que** les premiers moyens sont différents des deuxièmes moyens.

2. Utilisation selon la revendication 1, **caractérisée en ce que** le bâtiment est un bâtiment semi-public.

3. Utilisation selon la revendications 1 ou 2, **caractérisée en ce que** le système comprend des premiers moyens de déverrouillage pour actionner les premiers dispositifs de fermeture et des deuxièmes moyens de déverrouillage distincts pour actionner les deuxièmes dispositifs de fermeture.

4. Utilisation selon l'une des revendications 1 à 3, **caractérisée en ce que** les premiers dispositifs de fermeture sont libres d'un récepteur des signaux capacitifs-résistifs transmis par le corps et ne sont pas non plus en connexion de communication avec un tel récepteur.

5. Utilisation selon l'une des revendications précédentes, **caractérisée par** des moyens de déverrouillage, lesquels comprennent un transmetteur pour la transmission capacitive-résistive d'informations.

6. Utilisation selon la revendication 5, **caractérisée en ce que** les moyens de déverrouillage comprennent par ailleurs des moyens pour actionner les premiers dispositifs de fermeture.

7. Utilisation selon la revendication 6, **caractérisée en ce que** le moyen de déverrouillage se présente comme clé (21), laquelle comprend aussi des codages mécaniques (22.3) et/ou une puce d'identification (27) pour RFID ou une autre identification électrique.

8. Utilisation selon l'une des revendications précédentes, **caractérisée en ce que** les deuxièmes dispositifs de fermeture permettent un déverrouillage uniquement par des signaux capacitifs-résistifs sans un utilisateur déverrouillant d'autres façons quelconques.

9. Utilisation selon l'une des revendications précédentes, **caractérisée en ce que** les deuxièmes dispositifs de fermeture sont des dispositifs de fermeture mécatroniques et opérés par batteries, et sont libres d'une connexion électrique fixe vers un objet ne se trouvant pas sur ou dans la porte.

10. Utilisation selon l'une des revendications précédentes, **caractérisée en ce que** les deuxièmes dispositifs de fermeture comprennent une électrode réceptrice extérieure (31) et une électrode réceptrice intérieure (32), laquelle n'est pas couplée électriquement en parallèle à celle-ci, avec la porte fermée, l'électrode réceptrice extérieure (31) étant accessible depuis l'extérieur de l'objet et l'électrode réceptrice intérieure (32) étant accessible depuis l'intérieur de l'objet, et **en ce que** les deuxièmes dispositifs de fermeture passent vers une première condition de déverrouillage, lorsque l'électrode extérieure (31) reçoit un signal capacitif-résistif approprié et passent vers une deuxième condition de déverrouillage différente de la première, lorsque l'électrode intérieure (32) reçoit un signal capacitif-résistif approprié.

11. Utilisation selon la revendication 10, **caractérisée en ce que** dans la deuxième condition de déverrouillage la porte est ouverte en permanence.

12. Bâtiment avec au moins une porte extérieure et avec des portes intérieures, comprenant un système pour le contrôle d'accès, le système comprenant au moins un premier dispositif de fermeture et une pluralité de deuxièmes dispositifs de fermeture, le premier dispositif de fermeture respectivement au moins un des premiers dispositifs de fermeture étant installé pour le verrouillage et le déverrouillage d'une porte extérieure et les deuxièmes dispositifs de fermeture étant installés pour le verrouillage et le déverrouillage de portes intérieures, et ledit au moins un premier dispositif de fermeture comprenant des premiers moyens pour recevoir des informations de l'utilisateur, et les deuxièmes dispositifs de fermeture comprennent des deuxièmes moyens pour recevoir des informations par l'utilisateur, **caractérisé en ce que** les deuxièmes moyens comprennent un récepteur de signaux capacitifs-résistifs transmis par le corps de l'utilisateur et **en ce que** les premiers moyens sont différents des deuxièmes moyens.

13. Bâtiment selon la revendication 12, **caractérisé en ce qu'**il est aménagé comme un bâtiment semi-public.
